# EUROPÄISCHE PATENTSCHRIFT

(11) **EP 2 796 382 B1**
(45) Veröffentlichungstag und Bekanntmachung des Hinweises auf die Patenterteilung: **15.06.2016**
(21) Anmeldenummer: 14001096.8
(22) Anmeldetag: 25.03.2014
(51) Int. Cl.: B65D 41/48, B65D 51/26

(54) **Stopfen mit Originalitätssicherung**
Plug with tamper evident seal
Bouchon avec bague d'inviolabilité

(30) Priorität: 25.04.2013 DE 102013007192
(43) Veröffentlichungstag der Anmeldung: 29.10.2014
(73) Patentinhaber: Gaplast Gmbh, 82442 Altenau (DE)
(72) Erfinder: Kneer, Roland, 82490 Farchant (DE); Kneer, Stephan, 82490 Farchant (DE)
(74) Vertreter: Flosdorff, Jürgen

(56) Entgegenhaltungen:
- WO-A1-96/00172
- DE-B- 1 103 786
- DE-C1- 19 719 778
- DE-U1- 7 929 377
- GB-A- 1 218 156
- GB-A- 1 442 548
- US-A- 4 281 774
- US-A- 4 566 601
- US-A- 4 625 876
- US-A1- 2003 189 048
- US-A1- 2004 251 228
- US-B1- 7 604 139

## Beschreibung

Die Erfindung betrifft einen Stopfen für einen Behälter mit einem Deckelteil, der mit einer den Rand der Behälteröffnung umgreifenden Umfangswand verbunden ist, mit einem an dem Deckelteil angeformten Ring mit außen umlaufender Ringwulst (der auch als "Olive" bezeichnet wird) zum klemmenden Eingriff in die Behälteröffnung und mit einem Abreißring, der über mehrere in Umfangsrichtung beabstandete Anbindungsstege mit der Umfangswand verbunden ist, wobei zwischen den Anbindungsstegen innere querschnittlich keilförmige Ansätze an dem Abreißring angeformt sind, die bei der Befestigung des Stopfens an dem Behälter einen querschnittlich etwa umgekehrt keilförmigen, umlaufenden Vorsprung des Behälters zur Originaltätssicherung des Behälterinhalts übergreifen. Ein solcher Stopfen ist aus der DE 197 19 778 C1 bekannt.

Bei dem Behälter kann es sich beispielsweise um ein Fläschchen mit einem Hals oder um ein Tablettenröhrchen, insbesondere ein Kunststoffröhrchen handeln. Der Zweck des Abreißrings besteht darin, zu gewährleisten, dass der Behälterinhalt nicht ohne erkennbare Beschädigung des Stopfens manipuliert werden kann. Hierbei kommt den Anbindungsstegen zwischen dem Abreißring und der Umfangswand eine entscheidende Funktion zu. Die Anbindungsstege sind so bemessen, dass sie beim Aufpressen des Stopfens auf den befüllten Behälter nicht abreißen, dass jedoch wenigstens einige der Anbindungsstege bei einem unerlaubten Abhebeln des Stopfens reißen. Während beim Aufpressen des Stopfens der Abreißring, der bei Stopfen der betrachteten Art bisher eine geschlossene, durchgehend gleichdicke Ringform hat, allmählich zunehmend und gleichmäßig über den Umfang verteilt aufgeweitet wird, was zu einer gleichmäßigen Zugbelastung aller Anbindungsstege führt, tritt bei einem unerlaubten Abhebeln des Stopfens beispielsweise mit Hilfe von ein oder zwei den Abreißring untergreifenden Hilfsmitteln eine ungleichmäßige Verformung des Abreißrings auf, was zu einem Abreißen der am stärksten belasteten Anbindungsstege führt. Dies hat zur Folge, dass eine Manipulation des Behälterinhalts an der Beschädigung des Stopfens erkennbar wäre.

Die allmähliche und über den Umfang gleichmäßig verteilte Aufweitung des Abreißrings, bei der der Abreißring um bis zu 7 % gedehnt werden kann, erfolgt für die Anbindungsstege auf schonende Weise, weil der Abreißring mit seinen gleichmäßig über den Umfang verteilten inneren keilförmigen Ansätzen auf dem ebenfalls querschnittlich keilförmigen äußeren Vorsprung des Behälters nach außen gedrückt wird, wobei in der Endphase des Aufpressens die hinteren Kanten der keilförmigen Ansätze hinter der unteren umlaufenden Kante des Vorsprungs des Behälters einrasten. Bei einer unerlaubten Entfernung des Stopfens müssten hingegen die keilförmigen Ansätze direkt über die Rastkante des umlaufenden Vorsprungs des Behälters hinweg angehoben werden, wobei dies praktisch nicht möglich ist, ohne Anbindungsstege abzureißen.

Die Anbindungsstege sollten noch aus einem weiteren Grund nur eine so große Zugfestigkeit haben (unter Berücksichtigung der erforderlichen Toleranz), dass sie den Aufpressvorgang des Stopfens unbeschädigt überstehen. Sie sollen bei der ersten Ingebrauchnahme durch den Benutzer ohne Inanspruchnahme eines Werkzeugs abreißen, wenn der Stopfen abgenommen wird. Zur Abnahme des Stopfens ist dieser üblicherweise an seiner Umfangswand mit einer Mulde oder Kerbe versehen, in die der Benutzer z.B. mit dem Daumennagel eingreift, um den Stopfen von dem Behälter abzuhebeln. Dies sollte für einen erwachsenen Menschen mit durchschnittlichen Kräften möglich sein, wobei die Haltekraft des klemmenden Eingriffs der Olive des Stopfens und die Reißfestigkeit der Anbindungsstege zu überwinden sind.

In der Praxis zeigt sich jedoch, dass ein derartiges einstufiges Öffnungsverhalten beim erstmaligen Aushebeln des Stopfens nicht für alle Benutzer möglich ist. Dieser Kraftaufwand ist nicht nur, aber gerade auch für Senioren oft eine unüberwindbare Hürde, so dass sie vor der erstmaligen Abnahme des Stopfens mit einem Schneidwerkzeug die Anbindungsstege durchschneiden müssen. Ein solcher Vorgang wird als sehr lästig empfunden.

Die US 2004/251228 A1 offenbart einen gattungsgemäßen Stopfen für einen Behälter mit einem Deckelteil, der mit einer den Rand der Behälteröffnung umgreifenden Umfangswand verbunden ist, mit einem an dem Deckelteil angeformten Ring mit außen umlaufender Ringwulst zum klemmenden Eingriff in die Behälteröffnung und mit einem Abreißring, der über mehrere in Umfangsrichtung beabstandete Anbindungsstege mit der Umfangswand verbunden ist, wobei zwischen den Anbindungsstegen querschnittlich keilförmige Ansätze angeformt sind, die einen äußeren, querschnittlich umgekehrt keilförmigen, umlaufenden Vorsprung des Behälters in der Befestigungslage zur Originalitätssicherung des Behälterinhalts übergreifen, wobei der Abreißring ausgehend von seinem freien Rand zwischen zwei benachbarten keilförmigen Ansätzen wenigstens über einen Teil seiner Breite einen die Wand des Abreißrings durchtrennenden Ausschnitt aufweist, so dass der Abreißring als Abreißlasche an dem Ausschnitt untergreifbar ist. Bei diesem Stopfen ist der von dem freien Rand des Abreißrings ausgehende Ausschnitt so klein, dass er für einen Benutzer kaum erkennbar und nur bei großer Geschicklichkeit untergreifbar ist, um den Abreißring abzureißen.
Die US 4,625,876 offenbart eine Kappe für Behälter, bei der ein Abreißring über eine Umfangsnut mit der den Hals des Behälters umgreifenden Umfangswand verbunden ist. Der Abreißring hat eine freigeschnittene Lasche, die von einem Benutzer untergreifbar ist, um den Abreißring abzureißen. Die Lasche erstreckt sich in der Ebene des Umfangsrings und erfordert eine beträchtliche Geschicklichkeit, um den Abreißring abzureißen, was dadurch erleichtert werden soll, dass an der Innenseite der Lasche Vorsprünge angeformt sind.

Die US2003/1 89048 A1 offenbart einen Abreißring mit einer Lasche, die über ein elastisches und auftrennbares Verbindungselement mit dem dem freien Ende der Lasche gegenüber liegenden Ende des Abreißrings verbunden ist.

WO96/00172 A1 offenbart eine andere Schraubkappe mit einem Garantieband, das an einer Sollbruchstelle aufreißbar ist. Die als Ausschnitt im Garantieband ausgebildete Sollbruchstelle ist durch zwei auftrennbare Stege überbrückt. Neben der Sollbruchstelle ist eine keilförmige Entlastungszone am freien Rand des Garantiebandes vorgesehen.

Der vorliegenden Erfindung liegt die Aufgabe zugrunde, eine bessere Lösung für das oben genannte Problem anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass der Abreißring ausgehend von seinem freien Rand vorzugsweise mittig zwischen zwei benachbarten keilförmigen Ansätzen wenigstens über einen Teil seiner Breite einen die Wand des Abreißrings durchtrennenden Ausschnitt aufweist, so dass der Abreißring an dem Ausschnitt als Abreißlasche untergreifbar ist. Neben dem Ausschnitt ist eine schräg zu dem freien Rand hin verlaufende Kerbe in der Wand des Abreißrings ausgebildet, um neben dem Ausschnitt einen leicht aufklappbaren Griffabschnitt zu bilden.

Der Benutzer kann damit in einem zweistufigen Vorgang zunächst

den Abreißring entfernen, indem dieser in Folge des Ausschnitts bequem als Abreißlasche ergriffen und ringsum einfach abgerissen werden kann. Danach muss zum Abhebeln des Stopfens nur noch die Vorspannkraft der Dichtolive überwunden werden.

Bei dem erfindungsgemäßen Stopfen ist aber ebenso ein einstufiges Öffnen möglich, indem durch Kraftaufbringung in die Griffmulde der Umfangswand die Anbindungsstege abgerissen werden. Hierzu ist bevorzugt vorgesehen, dass sich die Griffmulde und damit der Kraftangriff im Bereich des Ausschnitts, d.h. neben bzw. über dem Ausschnitt befindet.

Die Erfindung sieht somit vor, dass der besondere Abreißring entweder wie ein herkömmlicher, durchgehend geschlossener Abreißring beim Abhebeln des Stopfens abgerissen oder aber in einem getrennten Schritt in Umfangsrichtung des Stopfens abgetrennt werden kann, bevor der Stopfen dann abgehebelt wird.

In einer bevorzugten Ausführungsform verbreitert sich der Ausschnitt, der sich bevorzugt etwa über die Hälfte der Breite bzw. Höhe des Abreißrings erstreckt, zum freien Rand des Abreißrings hin, wobei der weg geschnittene Teil vorzugsweise die Form eines gleichschenkligen Dreiecks hat, wobei ein kurzer Schenkel entlang des Randes des Abreißrings und der andere gleiche Schenkel senkrecht hierzu verläuft.

Durch die erfindungsgemäß neben diesem Ausschnitt schräg zum freien Rand hin verlaufende Kerbe in der Wand des Abreißrings ist ein leicht aufklappbarer Griffabschnitt gebildet, der eine spiegelbildliche Form wie der dreieckige Ausschnitt haben kann. Dieser durch die Kerbe gebildete Griffabschnitt ist leicht aufklappbar, und damit von dem Benutzer leicht zu ergreifen, um den Abreißring zu entfernen.

Von dem Ende des Ausschnitts kann eine weitere Kerbe in der Wand des Abreißrings bis zu dem gegenüber liegenden angebundenen Rand verlaufen, wobei diese Kerbe unter Berücksichtigung des verwendeten Materials des Stopfens eine solche Tiefe hat, dass der Abreißring beim Aufpressen auf den Behälter an der Kerbe nicht aufplatzt.

Anstelle dieser weiteren Kerbe kann auch ein weiterer Ausschnitt bis zum angebundenen Rand des Abreißrings vorgesehen sein, wobei zwischen den beiden Ausschnitten ein Steg verbleiben sollte, der eine solche Festigkeit hat, dass er beim Aufpressen auf den Behälter nicht reißt.
In einer weiteren Ausführungsform kann vorgesehen sein, dass der Abreißring über den vom freien Rand ausgehenden Ausschnitt durch einen dünneren Wandabschnitt geschlossen ist, der - anders als bei der oben erwähnten weiteren Kerbe - eine schräg
verlaufende Streifenform haben kann, wobei die streifenförmige Lamelle die beiden Endbereiche normaler Wandstärke miteinander verbindet. Durch diese nachgiebige Verbindung des Abreißrings über dem Ausschnitt erhält der Abreißring beim Aufpressen auf den Behälter eine zusätzliche Bewegungsfreiheit, die auch verhindert, dass der Abreißring beim Aufpressvorgang beschädigt wird.

Bei den obigen Ausführungsformen ist bevorzugt, dass der Abreißring im Bereich des Ausschnitts nicht durch Anbindungsstege an der Umfangswand befestigt ist. Da zur Entformung des Stopfens, der im Spritzgußverfahren hergestellt wird, die Anbindungsstege in Umfangsrichtung von den inneren keilförmigen Ansätzen des Abreißrings einen bestimmten Abstand haben müssen, ist bevorzugt, dass rechts und links von dem Ausschnitt jeweils ein keilförmiger Ansatz und erst in Umfangsrichtung darauffolgend ein Anbindungssteg ausgebildet ist.

Es liegt aber auch im Rahmen der Erfindung, dass ein Ausschnitt den Abreißring über seine gesamte Breite bzw. Höhe durchtrennt. Dabei ist bevorzugt anstelle der oben erwähnten, vom Ausschnitt ausgehenden weiteren Kerbe ein die Wand des Abreißrings durchtrennender Schnitt vorgesehen. In diesem Fall sollten die beiden seitlichen Endbereiche des Abreißrings über jeweils einen Anbindungssteg mit der Umfangswand verbunden sein.
Weitere Einzelheiten der Erfindung ergeben sich aus der nachfolgenden Beschreibung bevorzugter Ausführungsformen. Dabei zeigen:

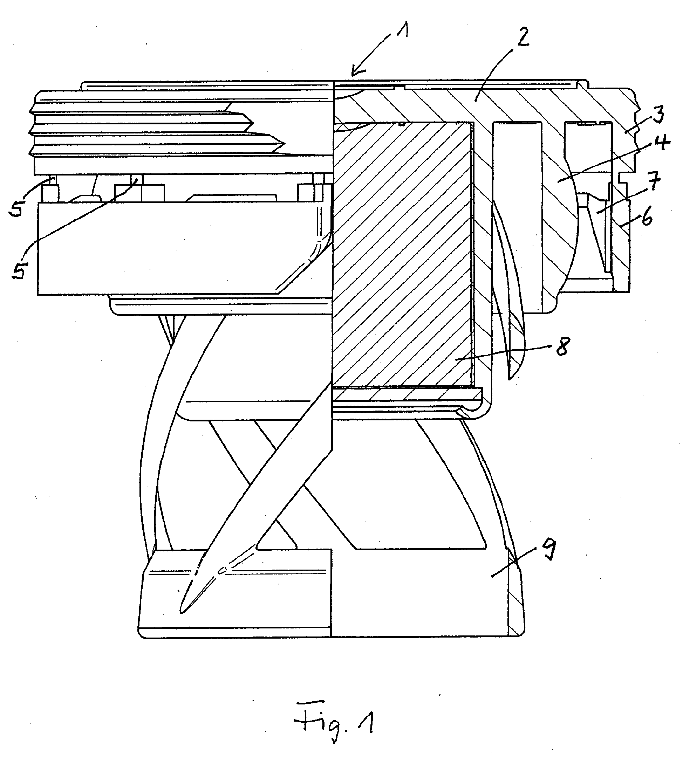

Figur 1 eine Ausführungsform des erfindungsgemäßen Stopfens zur Hälfte in einer Seitenansicht und zur Hälfte im Vertikalschnitt und
Figuren 2A
   bis 2G perspektivische Ansichten verschiedener Ausführungsformen der Erfindung sowie einige nicht zur Erfindung gehörende Beispiele ohne die schräg verlaufende Kerbe.

Der Stopfen 1 enthält einen Deckelteil 2, der mit einer den Rand einer nicht dargestellten Behälteröffnung umgreifenden Umfangswand 3 einstückig verbunden ist. Radial innerhalb der Umfangswand 3 ist an dem Deckelteil 2 ein Ring 4 mit einer außen umlaufenden Ringwulst angeformt, wobei der Ring auch als Olive bezeichnet wird.
Die Umfangswand 3 ist über Anbindungsstege 5 mit einem Abreißring 6 einstückig verbunden.

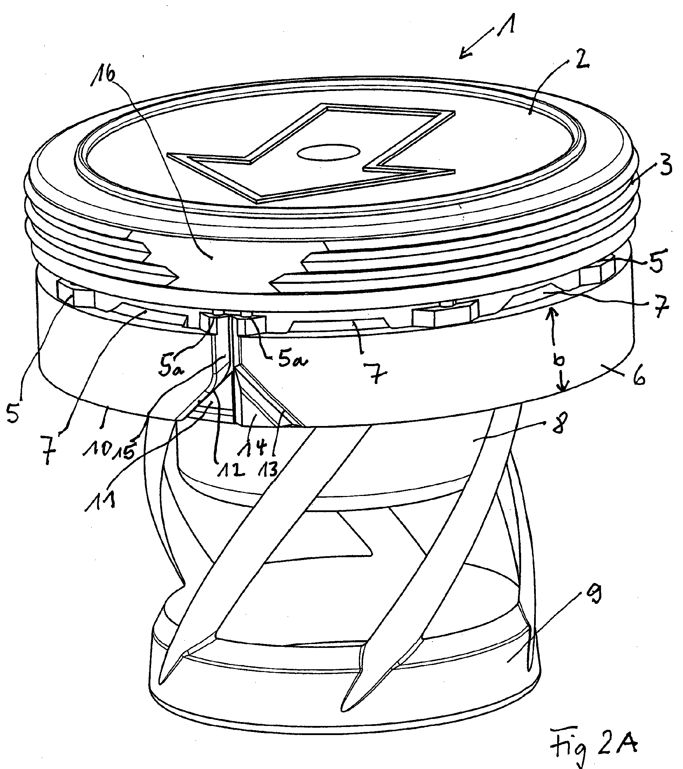

Zwischen zwei Anbindungsstegen 5 ist jeweils ein querschnittlich keilförmiger Ansatz 7 an der Innenseite des Abreißrings 6 angeformt.
Radial innerhalb der Olive 4 befinden sich außerdem eine Trockenmittelkammer 8 und ein Spiralniederhalter 9.
Wie die Figuren 2A bis 2G zeigen, ist der Abreißring 6 so ausgebildet, dass er vor der erstmaligen Abnahme von einem nicht dargestellten Behälter als Abreißlasche ergriffen und in Umfangsrichtung abgerissen werden kann, um die Abnahme des Stopfens 1 zu erleichtern.
Bei der in Figur 2A dargestellten Ausführungsform enthält der Abreißring 6 ausgehend von seinem freien Rand 10 einen dreieckigen Ausschnitt 11. Der weg geschnittene Teil hat die Form eines gleichschenkligen Dreiecks, wobei sich die gleichen Schenkel entlang der Unterkante 10 und senkrecht hierzu erstrecken. Dieser Ausschnitt 11 erstreckt sich über die Hälfte der Breite b des Abreißrings 6.

Spiegelbildlich zu der langen Seite 12 des Ausschnitts 11 ist erfindungsgemäß eine Kerbe 13 in der Wand des Abreißrings 6 ausgebildet. Der hierdurch ausgebildete dreieckige Teil 14 des Abreißrings 6 kann von einem Benutzer zum Abreißen des Abreißrings 6 untergriffen und bequem hoch geklappt werden. Um den Abreißvorgang weiter zu erleichtern, verläuft vom oberen Ende des Ausschnitts 11 eine weitere Kerbe 15 in der Wand des Abreißrings 6 bis zum oberen Rand des Abreißrings. Die verbleibende Wandstärke im Bereich der Kerbe 15 ist so bemessen, dass der Abreißring 6 beim Aufpressen auf den Behälter hier nicht aufreißt. Dies wird auch dadurch gewährleistet, dass der Abreißring 6 rechts und links von der Kerbe durch jeweils einen Anbindungssteg (5a) mit der Umfangswand 3 verbunden ist. Die Umfangswand 3 ist mit Rillen versehen, bis auf einen Bereich 16, in dem sich eine Griffmulde befindet, in der ein Benutzer mit dem Daumennagel die obere Wand des Deckelteils 2 untergreifen kann. Die Griffmulde befindet sich vertikal über der Kerbe 15 und dem Ausschnitt 11.

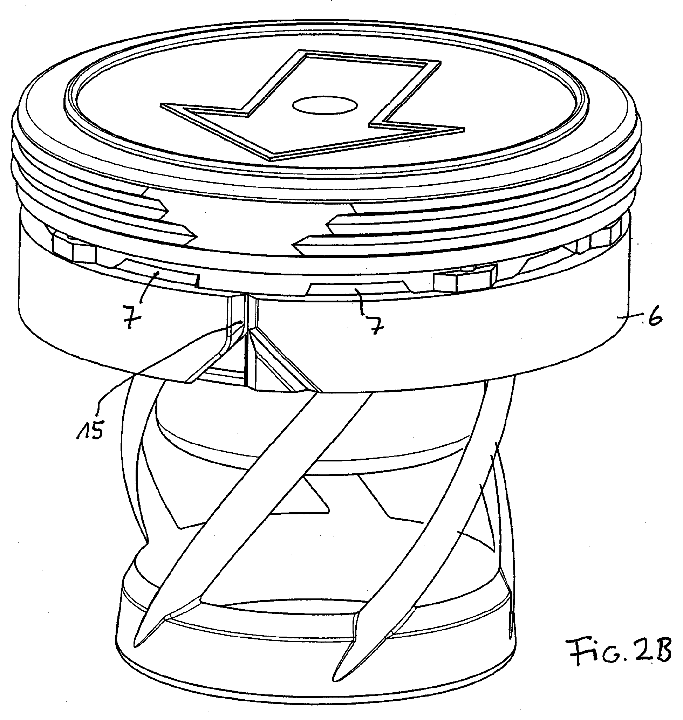

Die in Figur 2B dargestellte Ausführungsform unterscheidet sich von der vorigen dadurch, dass die beiden Anbindungsstege 5a weg gelassen sind. Hierdurch enthält der Abreißring 6 im Bereich der weiteren Kerbe 15 beim Aufpressen auf eine Behälteröffnung eine größere Verformbarkeit, wobei sicher gestellt sein soll, dass die verbliebene Wand an der Kerbe 15 nicht aufreißt.

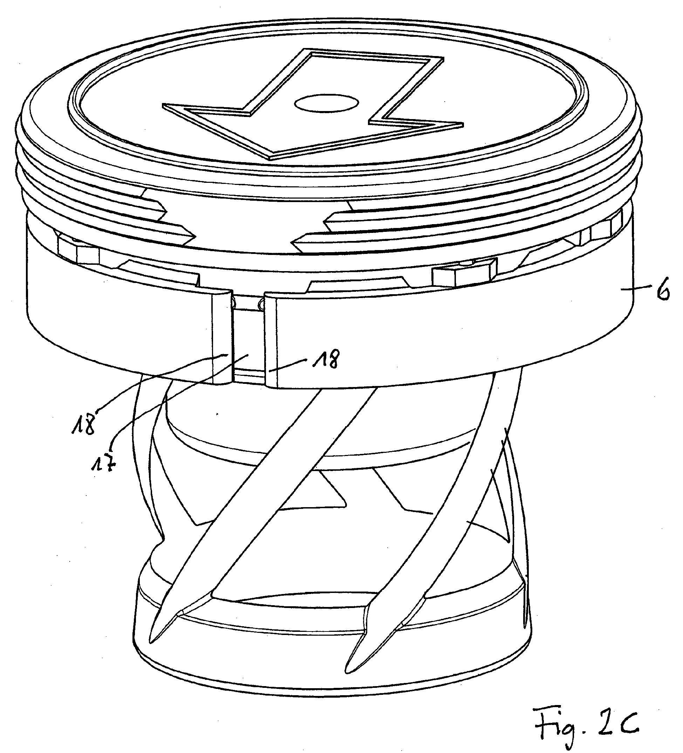

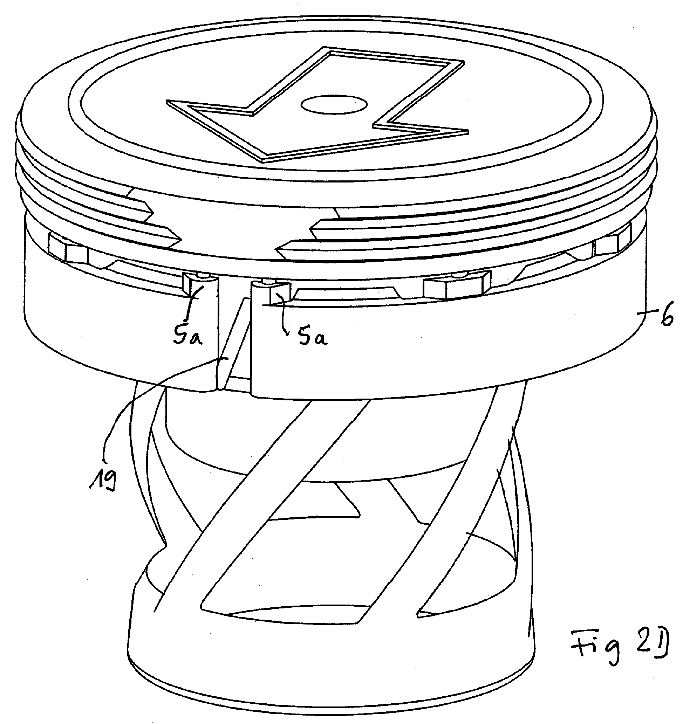

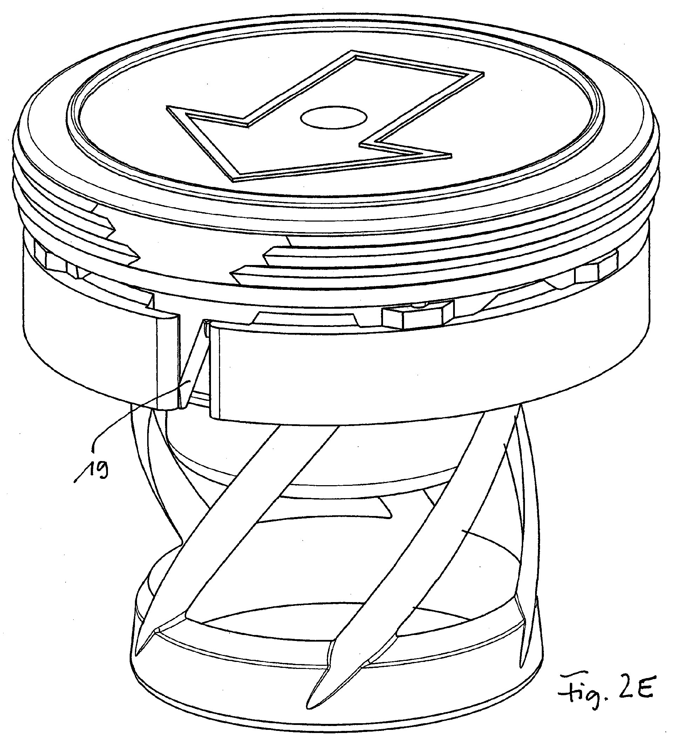

Bei dem in Figur 2C dargestellten Beispiel enthält der Abreißring 6 eine dünne Lamelle 17, die die beiden seitlichen Enden 18 eines ansonsten aufgeschnittenen Abreißrings 6 einstückig verbindet. Hier sind im Bereich des Einschnitts keine Anbindungsstege vorgesehen. Bei dem in Figu 2D dargestellten Beispiel verbindet eine diagonal verlaufende dünne Lamelle 19 die beiden seitlichen Enden des Abreißrings 6, wobei hier über den beiden seitlichen Enden des Abreißrings 6 Anbindungsstege 5a vorgesehen sind. Diese Anbindungsstege 5a fehlen bei dem Beispiel der Figur 2E, die ansonsten mit demjenigen der Figur 2D übereinstimmt. Die diagonale Lamelle 19 ermöglicht es bei diesem Beispiel, dass sich beim Aufpressen des Stopfens 1 auf einen Behälter der Abreißring 6 im Bereich der Ausschnitts so verformen kann, dass die Lamelle 19 nicht reißt.

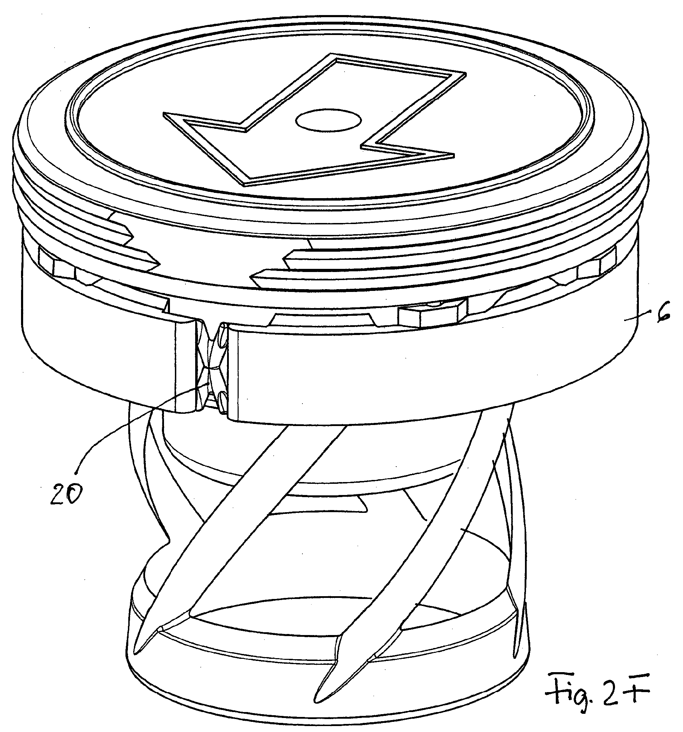

Bei dem Beispiel der Figur 2F sind die beiden seitlichen Enden des ansonsten aufgeschnittenen Abreißrings 6 durch eine X-förmige Lamelle 20 verbunden, ohne dass hier Anbindungsstege vorgesehen sind.

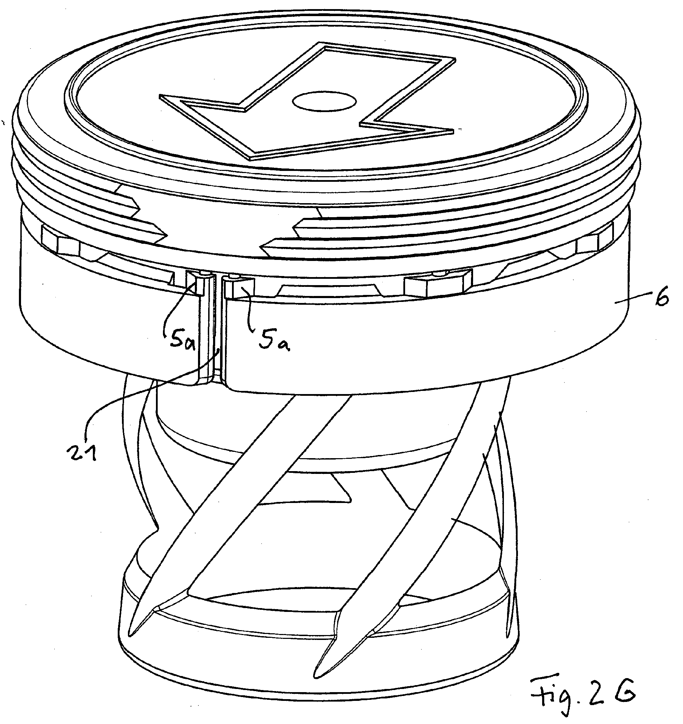

Bei dem Beispiel der Figur 2G ist der Abreißring 6 durch einen die Wand durchtrennenden Ausschnitt 21 über die gesamte Breite geöffnet, wobei die beiden seitlichen, nicht miteinander verbundenen Enden durch Anbindungsstege 5a mit der Umfangswand 3 verbunden sind.

Die Erfindung ist nicht auf die dargestellten Ausführungsformen beschränkt, sondern die vorstehend offenbarten Merkmale sind untereinander kombinierbar. Beispielsweise können alle Beispiele neben dem Ausschnitt in erfindungsgemäßer Kombination die schräg zum freien Rand verlaufende
Kerbe in der Wand des Abreißrings haben, wodurch ein leicht aufklappbarer Griffabschnitt im Sinne der Ansprüche gebildet ist.

## Patentansprüche

1. Stopfen (1) für einen Behälter mit einem Deckelteil (2), der mit einer den Rand der Behälteröffnung umgreifenden Umfangswand (3) verbunden ist, mit einem an dem Deckelteil (2) angeformten Ring (4) mit außen umlaufender Ringwulst zum klemmenden Eingriff in die Behälteröffnung und mit einem Abreißring (6), der einen freien Rand (10) und einen diesem gegenüber liegenden angebundenen Rand hat, der über mehrere in Umfangsrichtung beabstandete Anbindungsstege (5) mit der Umfangswand (3) verbunden ist, wobei zwischen den Anbindungsstegen (5) querschnittlich keilförmige Ansätze (7) angeformt sind, die einen äußeren, querschnittlich umgekehrt keilförmigen, umlaufenden Vorsprung des Behälters in der Befestigungslage zur Originalitätssicherung des Behälterinhalts untergreifen, wobei der Abreißring (6) ausgehend von seinem freien Rand (10) zwischen zwei benachbarten keilförmigen Ansätzen (7) wenigstens über einen Teil seiner Breite (b) einen die Wand des Abreißrings (6) durchtrennenden Ausschnitt (11) aufweist, so dass der Abreißring (6) als Abreißlasche an dem Ausschnitt (11) untergreifbar ist,
**dadurch gekennzeichnet,**
**dass** neben dem Ausschnitt (11) eine schräg zum freien Rand hin verlaufende Kerbe (13) in der Wand des Abreißrings (6) ausgebildet ist, wodurch neben dem Ausschnitt ein leicht aufklappbarer Griffabschnitt (14) gebildet ist.

2. Stopfen nach Anspruch 1,
**dadurch gekennzeichnet,**
**dass** der Ausschnitt (11) sich zum freien Rand (10) des Abreißrings (6) hin verbreitert.

3. Stopfen nach Anspruch 1 oder 2,
**dadurch gekennzeichnet,**
**dass** vom Ende des Ausschnitts (11) eine weitere Kerbe (15) in der Wand des Abreißrings (6) bis zu dessen angebundenem Rand verläuft.

4. Stopfen nach den Ansprüchen 1 oder 2,
**dadurch gekennzeichnet,**
**dass** ein weiterer Ausschnitt in der Wand des Abreißrings bis zu dem angebundenen Rand verläuft.

5. Stopfen nach den Ansprüchen 1 bis 4,
**dadurch gekennzeichnet,**
**dass** in der Umfangswand (3) eine Vertiefung (16) zum Eingreifen und Abhebeln des Stopfens ausgebildet ist.

## Claims

1. A stopper (1) for a container with a lid portion (2), which is connected to a peripheral wall (3) engaging around the container opening, with a ring (4) integrally formed on the lid portion (2) with an outer, peripheral annular bead for clamping engagement in the container opening and with a tamper evident ring (6), which has a free edge (10) and a connected edge opposite to it, which is connected to the peripheral wall (3) by means of a plurality of connecting webs (5) spaced apart in the peripheral direction, wherein integrally formed between the connecting webs (5) are projections (7) of wedge-shaped cross-section, which engage beneath an outer peripheral projection on the container of reverse wedge-shaped cross-section in the fastened position for tamper security of the container content, wherein the tamper evident ring (6) has a cut-out (11), starting from its free edge (10), dividing the wall of the tamper evident ring between two adjacent, wedge-shaped projections (7), at least over a proportion of its breadth (b) so that one may engage beneath the tamper evident ring (6), constituting a tear-off tab, at the cut-out (11), **characterised in that** formed adjacent the cut-out (11) in the wall of the tamper evident ring (6) there is a notch (13) extending obliquely towards the free edge, whereby formed adjacent the cut-out there is a gripping section (14), which may be readily folded out.

2. A stopper as claimed in Claim 1, **characterised in that** the cut-out (11) widens towards the free edge (10) of the tamper evident ring (6).

3. A stopper as claimed in Claim 1 or 2, **characterised in that** extending from the end of the cut-out (11) to the connected edge of the tamper evident ring there is a further notch (15) in the wall of the tamper evident ring (6).

4. A stopper as claimed in Claims 1 or 2, **characterised in that** a further cut-out extends in the wall of the tamper evident ring to the connected edge.

5. A stopper as claimed in Claims 1 to 4, **characterised in that** a recess (16) is formed in the peripheral wall (3) for engaging and levering off the stopper.

## Revendications

1. Bouchon (1) pour un contenant pourvu d'une partie formant couvercle (2), qui est reliée à une paroi périphérique (3) entourant le bord de l'ouverture de contenant, pourvu d'une bague (4), formée au niveau de la partie formant couvercle (2), comprenant un bourrelet de bague périphérique côté extérieur servant à venir en prise par serrage avec l'ouverture de contenant, et pourvu d'une bague d'inviolabilité (6), qui a un bord libre (10) et un bord lié faisant face au bord libre, lequel est relié, par l'intermédiaire de plusieurs entretoises de liaison (5) espacées dans la direction périphérique, à la paroi périphérique (3), sachant que sont formés entre les entretoises de liaison (5) sur la section transversale des prolongements (7) de forme conique, qui viennent en prise par en bas, dans la position de fixation afin de garantir l'inviolabilité du contenu de contenant, avec une partie faisant saillie périphérique extérieure, présentant une forme de cône inversé dans la section transversale, du contenant, sachant que la bague d'arrachage (6) présente, en partant de son bord libre (10) entre deux prolongements (7) adjacents présentant une forme conique, au moins sur une partie de sa largeur (b), une découpe (11) séparant la paroi de la bague d'arrachage (6) de sorte que la bague d'arrachage (6) peut être prise par en bas en tant que bride d'arrachage au niveau de la découpe (11),
**caractérisé en ce**
**qu'**une encoche (13) s'étendant de manière oblique par rapport au bord libre dans la paroi de la bague d'arrachage (6) est réalisée à côté de la découpe (11) ce qui permet de former, à côté de la découpe, une section de préhension (14) facilement relevable.

2. Bouchon selon la revendication 1,
**caractérisé en ce**
**que** la découpe (11) s'élargit en direction du bord libre (10) de la bague d'arrachage (6).

3. Bouchon selon la revendication 1 ou 2,
**caractérisé en ce**
**qu'**une autre encoche (15) dans la paroi de la bague d'arrachage (6) s'étend depuis l'extrémité de la découpe (11) jusqu'au bord lié de ladite bague d'arrachage.

4. Bouchon selon les revendications 1 ou 2,
**caractérisé en ce**
**qu'**une autre découpe dans la paroi de la bague d'arrachage s'étend jusqu'au bord lié.

5. Bouchon selon les revendications 1 à 4,
**caractérisé en ce**
**qu'**un renfoncement (16) servant à venir en prise avec le bouchon et servant à le relever est réalisé dans la paroi périphérique (3).
